Europäisches Patentamt

European Patent Office

Office européen des brevets

(19)

(11) **EP 1 276 787 B1**

(12) **EUROPÄISCHE PATENTSCHRIFT**

(45) Veröffentlichungstag und Bekanntmachung des Hinweises auf die Patenterteilung:
**10.03.2004 Patentblatt 2004/11**

(21) Anmeldenummer: **00990612.4**

(22) Anmeldetag: **24.11.2000**

(51) Int Cl.$^7$: **C08G 18/78**, C08G 18/70, C09D 175/04

(86) Internationale Anmeldenummer:
**PCT/EP2000/011724**

(87) Internationale Veröffentlichungsnummer:
**WO 2001/040347 (07.06.2001 Gazette 2001/23)**

(54) **HOCHFUNKTIONELLE WASSERDISPERGIERBARE POLYISOCYANATGEMISCHE**

HIGHLY FUNCTIONAL POLYISOCYANATE MIXTURES WHICH ARE DISPERSABLE IN WATER

MELANGES DE POLYISOCYANATE DISPERSABLES DANS L'EAU ET HAUTEMENT FONCTIONNELS

(84) Benannte Vertragsstaaten:
**AT BE CH CY DE DK ES FI FR GB GR IE IT LI LU MC NL PT SE TR**

(30) Priorität: **02.12.1999 DE 19958170**

(43) Veröffentlichungstag der Anmeldung:
**22.01.2003 Patentblatt 2003/04**

(73) Patentinhaber: **Bayer MaterialScience AG**
**51368 Leverkusen (DE)**

(72) Erfinder:
• **LAAS, Hans-Josef**
**50733 Köln (DE)**
• **BRAHM, Martin**
**51519 Odenthal (DE)**
• **HALPAAP, Reinhard**
**51519 Odenthal (DE)**

(56) Entgegenhaltungen:
**EP-A- 0 524 500**     **EP-A- 0 802 210**
**EP-A- 0 835 889**     **EP-A- 0 959 087**

## Beschreibung

Die Erfindung betrifft Polyether-modifizierte, wasserdispergierbare Polyisocyanatgemische, ein Verfahren zu ihrer Herstellung und ihre Verwendung als Ausgangskomponente bei der Herstellung von Polyurethankunststoffen, insbesondere als Vernetzer für wasserlösliche oder -dispergierbare Lackbindemittel oder -bindemittelkomponenten mit gegenüber Isocyanatgruppen reaktionsfähigen Gruppen.

Vor dem Hintergrund eines zunehmenden Umweltbewusstseins gewannen in den letzten Jahren wasserdispergierbare Polyisocyanate für verschiedene Anwendungsgebiete an Bedeutung.

Eine besondere Rolle spielen wasserdispergierbare Polyisocyanate heute als Vernetzerkomponenten für wasserverdünnbare Zweikomponenten-Polyurethan(2K-PUR)-Lacke. In Kombination mit wäßrigen Polyoldispersionen gestatten sie die Formulierung lösemittelfreier Lacksysteme, die bereits bei Raumtemperatur zu qualitativ hochwertigen Beschichtungen aushärten, die hinsichtlich Lösemittel- und Chemikalienbeständigkeit oder mechanischer Belastbarkeit konventionellen Lacken in nichts nachstehen (vgl. z. B. EP-A-0 358 979, EP-A-0 469 389, EP-A-0 496 210, EP-A-0 542 105, EP-A-0 543 228, EP-A-0 562 282, EP-A-0 562 436, EP-A-0 583 728, DE-A-4 129 951, DE-A-4 226 242, DE-A-4 226 243 oder DE-A-4 226 270).

Bedeutung besitzen wasserdispergierbare Polyisocyanatzubereitungen daneben auch als Zusatzmittel für wäßrige Dispersionsklebstoffe. Mit ihrer Hilfe lassen sich beispielsweise die Wärmebeständigkeit und Wasserfestigkeit von Verklebungen unterschiedlicher Materialien erheblich verbessern (vgl. z. B. EP-A-0 061 628 und EP-A-0 206 059).

Wasserdispergierbare Polyisocyanate finden außerdem Verwendung als Vernetzerkomponenten für wäßrige Dispersionen in der Textilausrüstung (EP-A-0 560 161 oder WO 95/30045) oder in formaldehydfreien Textildruckfarben (EP-A-0 571 867 oder DE-A-19 533 218) und eignen sich darüberhinaus beispielsweise auch als Hilfsmittel zur Naßverfestigung von Papier (EP-A-0 564 912, EP-A-0 582 166, EP-A-0 707 113, WO 96/20309 und WO 97/04169).

In der Praxis haben sich für diese Anwendungsgebiete nichtionische, mit Hilfe von Polyethern hydrophilmodifizierte Polyisocyanate durchgesetzt. Die Herstellung solcher wasserdispergierbaren Polyisocyanate ist in einer Reihe von Veröffentlichungen beschrieben.

Nach der Lehre der DE-A-2 415 435 stellen beispielsweise Urethane aus organischen, insbesondere aromatischen Polyisocyanaten und mindestens 5 Ethylenoxideinheiten aufweisenden Polyethylenglykolmonoalkylethern oberflächenaktive Substanzen dar, die nach GB-A-1 444 933 und DE-A-2 908 844 die Herstellung stabiler wäßriger Emulsionen aromatischer Polyisocyanate ermöglichen.

Durch Umsetzung mit Alkylenoxidpolyethern hydrophil modifizierte aromatische Polyisocyanate sind auch aus EP-A-0 061 628 und EP-A-0 095 594 bekannt. In Form wäßriger Emulsionen finden diese Produkte insbesondere im Klebstoffbereich Verwendung.

Wasserdispergierbare Zubereitungen (cyclo)aliphatischer Polyisocyanate sind Gegenstand der EP-A-0 206 059. Sie enthalten als Emulgatoren Umsetzungsprodukte aus Polyisocyanaten mit ein- oder mehrwertigen Polyalkylenoxidalkoholen, bestehend aus mindestens einer, mindestens 10 Ethylenoxideinheiten aufweisenden Polyetherkette, und dienen ebenfalls als Zusatzmittel für wäßrige Klebstoffe.

EP-A-0 516 277 beschreibt die Hydrophilierung spezieller, tertiär gebundene Isocyanatgruppen aufweisender Polyisocyanate durch Umsetzung mit einwertigen Polyalkylenoxidpolyethem und die Verwendung dieser Produkte als Vernetzerkomponente für wäßrige Beschichtungsmittel.

Für hochwertige lichtechte Lackanwendungen haben sich insbesondere die in der EP-A-0 540 985 und der US-A- 5 200 489 beschriebenen, durch Urethanisierung aliphatischer und/oder cycloaliphatischer Lackpolyisocyanate mit kurzkettigen, im statistischen Mittel weniger als 10 Ethylenoxideinheiten aufweisenden Polyethylenoxidpolyetheralkoholen erhältlichen Polyisocyanatgemische bewährt.

Auch die aus der EP-A-0 645 410 und EP-A-0 680 983 als Vernetzer für wäßrige Holz- und Möbellacke bekannten wasserdispergierbaren Polyisocyanate auf Basis von 2,4(6)-Diisocyanatotoluol (TDI) bzw. Gemischen aus TDI und 1,6-Diisocyanatohexan (HDI) enthalten als hydrophile Bestandteile Urethane aus Polyisocyanat und monofunktionellen Polyethylenoxidpolyetheralkoholen.

Neben diesen rein nichtionisch hydrophilierten, Polyetherurethane enthaltenden Polyisocyanaten wurden auch Polyether-modifizierte wasserdispergierbare Polyisocyanate beschrieben, die zur Verbesserung der Emulgierbarkeit oder zur Erzielung spezieller Effekte zusätzlich noch ionische Gruppen, beispielsweise Sulfonatgruppen (vgl. z. B. EP-A-0 703 255) oder Amino- bzw. Ammoniumgruppen (vgl. z. B. EP-A-0 582 166 und EP-A-0 707 113) aufweisen. Solche ionisch/nichtionisch-modifizierte Polyisocyanate sind für Lackanwendungen in der Regel weniger geeignet. Sie kommen vorzugsweise in der umweltfreundlichen Textilausrüstung bzw. als Papiernaßfestmittel zum Einsatz.

Trotz ihrer breiten Marktakzeptanz für die unterschiedlichsten Anwendungen weisen die Polyetherurethanmodifizierten wasserdispergierbaren Polyisocyanate des Standes der Technik eine Reihe prinzipieller Nachteile auf.

So lassen sich wasserdispergierbare Polyisocyanate, die unter Verwendung höhermolekularer Polyetheralkohole, beispielsweise im Falle reiner Polyethylenoxidpolyether bereits ab einem mittleren Molekulargewicht von ca. 700, hergestellt wurden, aufgrund eines sehr hohen während der Dispergierung zu überwindenden Viskositätsmaximums oftmals nur unter Anwendung erheblicher Scherkräfte (z.B.

Hochgeschwindigkeitsrührer) homogen in wäßrige Medien einarbeiten. Zudem neigen solche Produkte, insbesondere bei hohen Emulgatorgehalten, wie sie zum Erreichen besonders feinteiliger, sedimentationsstabiler Dispersionen erforderlich sind, häufig zum Kristallisieren.

Unter Verwendung kürzerer Polyetherketten lassen sich hingegen wasserdispergierbare Polyisocyanate erhalten, die sich sehr leicht bereits von Hand zu stabilen Dispersionen in Wasser einrühren lassen und selbst bei hohen Hydrophilierungsgraden, d.h. bei hohen Gehalten an Ethylenoxideinheiten, keinerlei Kristallisationstendenz zeigen. Aufgrund des relativ niedrigen Molekulargewichtes der zur Modifizierung eingesetzten Polyalkylenoxidpolyether nehmen dabei allerdings mit steigendem Hydrophilierungsgrad sowohl der Gehalt an Isocyanatgruppen als auch die mittlere Isocyanatfunktionalität stetig ab. In der Praxis sind aber für die Mehrzahl der obengenannten Anwendungsgebiete, beispielsweise als Vernetzerkomponenten für Lacke und Beschichtungen, gerade hochhydrophilierte besonders feinteilig zu emulgierende Polyisocyanate mit hohen NCO-Gehalten und möglichst hoher Funktionalität erwünscht.

Die DE-A-19 822 891 beschreibt erstmals ein Verfahren zur Herstellung wasserdispergierbarer Polyisocyanatgemische, die nicht mit den vorstehend genannten Nachteilen behaftet sind. Dabei werden monomerenarme, aus mindestens zwei Diisocyanatmolekülen bestehende Polyisocyanate mit monofunktionellen Polyethylenoxidpolyetheralkoholen unter Allophanatisierungsbedingungen so umgesetzt, dass mindestens 60 mol-%, vorzugsweise mindestens 80 mol-%, besonders bevorzugt mindestens 90 mol-% der durch NCO/OH-Reaktion primär gebildeten. Urethangruppen zu Allophanatgruppen weiterreagieren. Die resultierenden Polyisocyanatgemische, die einen Allophanatisierungsgrad von mindestens 60 % aufweisen, lassen sich bereits bei deutlich niedrigeren Hydrophilierungsgraden erheblich leichter und feinteiliger in wäßrige Systeme einrühren als unter Verwendung baugleicher Polyetheralkohole hergestellte wasserdispergierbare Polyisocyanate, bei denen die Polyetherketten über Urethanbindungen mit dem Polyisocyanat verknüpft sind. Sie zeichnen sich gegenüber den bis dahin bekannten, Polyetherketten enthaltenden Polyisocyanatgemischen bei gleicher oder sogar besserer Wasserdispergierbarkeit durch einen höheren Gehalt an Isocyanatgruppen und eine höhere Funktionalität aus.

Wie jetzt gefunden wurde, weisen Polyisocyanatgemische, die ebenfalls aus monomerenarmen, aus mindestens zwei Diisocyanatmolekülen bestehenden Polyisocyanaten und monofunktionellen Polyethylenoxidpolyetheralkoholen unter Allophanatisierungsbedingungen hergestellt wurden, gegenüber den Polyetherallophanaten der DE-A-19 822 891 eine nochmals deutlich verbesserte Wasserdispergierbarkeit auf, wenn die Allophanatisierungsreaktion bereits vor Erreichen eines Allophanatisierungsgrades von 60 % abgebrochen wird. Auf diese Weise lassen sich wasserdispergierbare Polyisocyanatgemische herstellen, die neben einer nochmals verbesserten Dispergierbarkeit gleichzeitig den Vorteil eines höheren NCO-Gehalt aufweisen und für den Einsatz in sämtlichen obengenannten Anwendungsgebieten hydrophiler Polyisocyanate, insbesondere als Ausgangskomponente zur Herstellung von Polyurethankunststoffen und vor allem als Vernetzer für wäßrige Bindemittel oder Bindemittelkomponenten in Beschichtungssystemen geeignet sind.

Obwohl in einigen Veröffentlichungen, die die Herstellung Allophanatgruppen enthaltender Polyisocyanate zum Gegenstand haben, beispielsweise in der EP-A-0 000 194, EP-A-0 303 150, EP-A-0 682 012, US-A-5 380 792 oder US-A-5 086 175, als mögliche alkoholische Ausgangsverbindungen zur Herstellung solcher Produkte auch die üblichen Polyetheralkohole genannt werden und daneben in der EP-A-0 000 194, EP-A-0 303 150 und EP-A-0 682 012 innerhalb langer Listen geeigneter Ausgangsisocyanate auch Polyisocyanate einer Funktionalität > 2, wie z. B. Trimerisierungsprodukte von HDI oder 1-Isocyanato-3,3,5-trimethyl-5-isocyanatomethylcyclohexan (IPDI), pauschal erwähnt werden, konnte der Fachmann keiner der obengenannten Veröffentlichungen irgendeinen konkreten Hinweis darauf entnehmen, dass sich unter Allophanatisierungsbedingungen hergestellte Umsetzungsprodukte monomerenarmer Polyisocyanate mit monofunktionellen Polyethylenoxidpolyetheralkoholen bei Allophanatisierungsgraden von 20 bis 59 % erheblich leichter und feinteiliger zu stabilen Emulsionen in Wasser einrühren lassen als Polyisocyanatgemische gleicher Bruttozusammensetzung, die nach den bekannten Verfahren des Standes der Technik unter Urethanisierung oder dem Verfahren der DE-A-19 822 891 hergestellt wurden.

Gegenstand der vorliegenden Erfindung sind wasserdispergierbare Polyisocyanatgemische auf Basis aliphatischer, cycloaliphatischer, araliphatischer und/oder aromatischer Diisocyanate mit

a) einer mittleren Isocyanatfunktionalität von mindestens 2,0,
b) einem Gehalt an Isocyanatgruppen (berechnet als NCO; Molekulargewicht = 42) von 5,0 bis 25,0 Gew.-% und
c) einem Gehalt an innerhalb von Polyetherketten gebundenen Ethylenoxideinheiten (berechnet als $C_2H_4O$; Molekulargewicht = 44) von 2 bis 50 Gew.-%, wobei die Polyetherketten im statistischen Mittel 5 bis 35 Ethylenoxideinheiten enthalten,

dadurch gekennzeichnet, dass die Polyetherketten zu 20 bis 59 mol-% über Allophanatgruppen mit jeweils zwei, jeweils aus mindestens zwei Diisocyanaten aufgebauten Polyisocyanatmolekülen verknüpft sind.

Gegenstand der Erfindung ist auch ein Verfahren zur Herstellung dieser wasserdispergierbaren Polyisocyanatgemische, welches dadurch gekennzeichnet ist, dass man

A) eine Polyisocyanatkomponente einer (mittleren) NCO-Funktionalität von 2,0 bis 5,0, einem Gehalt an aliphatisch, cycloaliphatisch, araliphatisch und/oder aromatisch gebundenen Isocyanatgruppen (berechnet als NCO; Molekulargewicht = 42) von 8,0 bis 27,0 Gew.-% und einem Gehalt an monomeren Diisocyanaten von weniger als 1 Gew.-% mit

B) einem einwertigen, im statistischen Mittel von 5 bis 35 Ethylenoxideinheiten aufweisenden Polyalkylenoxidpolyetheralkohol

unter Einhaltung eines NCO/OH-Äquivalentverhältnisses von 6:1 bis 400:1 so miteinander umsetzt, dass 20 bis 59 % der durch NCO/OH-Reaktion primär gebildeten Urethangruppen zu Allophanatgruppen weiterreagieren, wobei im übrigen Art und Mengenverhältnisse der genannten Ausgangsverbindungen so gewählt werden, dass die resultierenden Umsetzungsprodukte den oben unter a) bis c) genannten Bedingungen entsprechen.

Gegenstand der Erfindung ist auch die Verwendung dieser Polyisocyanatgemische als Ausgangskomponenten bei der Herstellung von Polyurethankunststoffen.

Gegenstand ist schließlich auch die Verwendung dieser Polyisocyanatgemische als Vernetzer für wasserlösliche oder -dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

Die beim erfindungsgemäßen Verfahren einzusetzende Komponente A) weist eine (mittlere) NCO-Funktionalität von 2,0 bis 5,0, vorzugsweise von 2,3 bis 4,5, einen Gehalt an Isocyanatgruppen von 8,0 bis 27,0 Gew.-%, vorzugsweise 14,0 bis 24,0 Gew.-% und einen Gehalt an monomeren Diisocyanaten von weniger als 1 Gew.-%, vorzugsweise weniger als 0,5 Gew.-% auf. Sie besteht aus mindestens einem organischen Polyisocyanat mit aliphatisch, cycloaliphatisch, araliphatisch und/oder aromatisch gebundenen Isocyanatgruppen.

Es handelt sich bei den Polyisocyanaten bzw. Polyisocyanatgemischen der Komponente A) um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, DE-A-1 670 666, DE-A-1 954 093, DE-A-2 414 413, DE-A-2 452 532, DE-A-2 641 380, DE-A-3 700 209, DE-A-3 900 053 und DE-A-3 928 503 oder EP-A-0 336 205, EP-A-0 339 396 und EP-A-0 798 299 beispielhaft beschrieben sind.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norboman, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugt handelt es sich bei den Ausgangskomponenten A) um Polyisocyanate oder Polyisocyanatgemische der genannten Art mit ausschließlich aliphatisch und/oder cycloaliphatisch gebundenen Isocyanatgruppen.

Ganz besonders bevorzugte Ausgangskomponenten A) sind Polyisocyanate bzw. Polyisocyanatgemische mit Isocyanuratstruktur auf Basis von HDI, IPDI und/oder 4,4'-Diisocyanatodicyclohexylmethan.

Bei der Komponente B) handelt es sich um einwertige, im statistischen Mittel 5 bis 35, vorzugsweise 7 bis 30 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38).

Als geeignete Startermoleküle zur Herstellung der beim erfindungsgemäßen Verfahren eingesetzten Polyetheralkohole B) seien hier beispielhaft genannt: gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol.

Bevorzugte Startermoleküle sind gesättigte Monoalkohole mit bis zu 4 Kohlenstoffatomen. Besonders bevorzugt wird Methanol als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen B) handelt es sich entweder um reine Polyethylenoxidpolyether oder gemischte Polyalkylenoxidpolyether, deren Alkylenoxideinheiten zu mindestens 30 mol-%, vorzugsweise zu mindestens 40 mol-% aus Ethylenoxideinheiten bestehen.

Bevorzugte Ausgangskomponenten B) für das erfindungsgemäße Verfahren sind reine Polyethylenglycolmonomethyletheralkohole, die im statistischen Mittel 7 bis 30, ganz besonders bevorzugt 7 bis 25 Ethylenoxideinheiten aufweisen.

Gegebenenfalls, jedoch weniger bevorzugt, können beim erfindungsgemäßen Verfahren zusätzlich zu den genannten Polyetheralkoholen B) in untergeordneten Mengen noch weitere gegenüber Isocyanaten reaktive Verbindungen mit anionischen oder kationischen Gruppen, beispielsweise mit Carboxylat-, Sulfonat- oder Ammoniumgruppen, als hydrophile Aufbaukomponenten mitverwendet werden.

Zur Durchführung des erfindungsgemäßen Verfahrens werden die Ausgangskomponenten A) und B) bei Temperaturen von 40 bis 180°C, vorzugsweise 50 bis 150°C, unter Einhaltung eines NCO-/OH-Äquivalent-Verhältnisses von 6:1 bis 400:1, vorzugsweise von 8:1 bis 140:1, so miteinander umgesetzt, dass 20 bis 59 mol-%, vorzugsweise 25 bis 59 mol-%, besonders bevorzugt 30 bis 59 mol-% der durch NCO/OH-Reaktion primär gebildeten Urethangruppen zu Allophanatgruppen weiterreagieren.

Zur Beschleunigung der Allophanatisierungsreaktion können beim erfindungsgemäßen Verfahren gegebenenfalls geeignete Katalysatoren mitverwendet werden. Hierbei handelt es sich um die üblichen bekannten Allophanatisierungskatalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(ethylacetoacetat), Eisen-(III)-chlorid, Kaliumoctoat, Mangan-Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren für das erfindungsgemäße Verfahren sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A-0 649 866 Seite 4, Zeile 7 bis Seite 5, Zeile 15 beschrieben.

Bevorzugte Katalysatoren für das erfindungsgemäße Verfahren sind Zinkverbindungen der obengenannten Art. Ganz besonders bevorzugt ist die Verwendung Zink-(II)-n-octanoat, Zink-(II)-2-ethyl-1-hexanoat und/oder Zink-(II)-stearat.

Diese Katalysatoren kommen beim erfindungsgemäßen Verfahren, falls überhaupt, in einer Menge von 0,001 bis 5 Gew.-%, vorzugsweise 0,005 bis 1 Gew.-%, bezogen auf das Gesamtgewicht der Reaktionspartner zum Einsatz.

Die Zugabe zum Reaktionsgemisch kann dabei nach beliebigen Methoden erfolgen. So ist es beispielsweise möglich, den gegebenenfalls mitzuverwendenden Katalysator entweder der Polyisocyanatkomponente A) und/oder der Polyetherkomponente B) vor Beginn der eigentlichen Umsetzung zuzumischen. Ebenso ist es möglich, den Katalysator dem Reaktionsgemisch zu einem beliebigen Zeitpunkt während der Urethanisierungsreaktion oder im Sinne einer zweistufigen Reaktionsführung auch im Anschluß an die Urethanisierung, d. h. wenn der einem vollständigen Umsatz von Isocyanat- und Hydroxylgruppen theoretisch entsprechende NCO-Gehalt erreicht ist, zuzusetzen.

Der Verlauf der Umsetzung kann beim erfindungsgemäßen Verfahren durch z.B. titrimetrische Bestimmung des NCO-Gehaltes verfolgt werden. Nach Erreichen des angestrebten NCO-Gehaltes, vorzugsweise wenn der Allophanatisierungsgrad, d.h. der aus dem NCO-Gehalt errechenbare prozentuale Anteil der zu Allophanatgruppen umgesetzten, aus Polyetheralkohol und Polyisocyanat entstandenen Urethangruppen, des Reaktionsgemisches 25 bis 59 %, besonders bevorzugt 30 bis 59 % beträgt, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Allophanatisierungskatalysators der genannten Art wird die Umsetzung im allgemeinen aber durch Zugabe geeigneter Katalysatorgifte, beispielsweise Säurechloride wie Benzoylchlorid oder Isophthaloyldichlorid, abgestoppt.

Im übrigen werden beim erfindungsgemäßen Verfahren Art und Mengenverhältnisse der Ausgangskomponenten im Rahmen der gemachten Angaben so gewählt, dass die resultierenden Polyisocyanatgemische den oben unter a) bis c) gemachten Angaben entsprechen, wobei a) die mittlere NCO-Funktionalität vorzugsweise 2,2 bis 9,0, besonders bevorzugt 2,5 bis 5,4, b) der NCO-Gehalt vorzugsweise 6,0 bis 23,0 Gew.-%, besonders bevorzugt 8,5 bis 22,0 Gew.-% und c) der Gehalt an innerhalb von Polyetherketten gebundenen Ethylenoxideinheiten vorzugsweise 5 bis 40 Gew.-%, besonders bevorzugt 7 bis 25 Gew.-% beträgt.

Die gemachten Angaben bezüglich der NCO-Funktionalität der erfindungsgemäßen Verfahrensprodukte beziehen sich dabei auf den Wert, der sich rechnerisch aus Art und Funktionalität der Ausgangskomponenten nach der Formel

$$F = \frac{\sum val\, NCO \; - \; \sum (1 + x) \cdot mol\, OH}{\sum \left( \dfrac{val\, NCO}{f_{NCO}} \right) \; + \sum mol\, OH \; - \; \sum (1 + x) \cdot mol\, OH}$$

bestimmen läßt, in welcher x den Anteil der beim erfindungsgemäßen Verfahren zu Allophanatgruppen umgesetzten Urethangruppen bedeutet. Die Funktionalität $f_{NCO}$ der Ausgangspolyisocyanate A) läßt sich aus dem NCO-Gehalt und dem beispielsweise durch Gelpermeationschromatographie (GPC) oder Dampfdruckosmose bestimmten Molekulargewicht errechnen.

Das erfindungsgemäße Verfahren kann gegebenenfalls in einem geeigneten, gegenüber Isocyanatgruppen inerten Lösemittel durchgeführt werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha®, Solvesso®, Shellsol®, Isopar®, Nappar® und Diasol® im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die erfindungsgemäßen Verfahrensprodukte stellen klare, praktisch farblose Polyisocyanatgemische der bereits oben genannten Zusammensetzung dar, die sich leicht, ohne Einsatz hoher Scherkräfte, durch bloßes Einrühren in Wasser dispergieren lassen, wobei zum Erhalten sedimentationsstabiler wäßriger. Dispersionen bei einer vorgegebenen Zusammensetzung und Molekulargewichtsverteilung der Polyethersegmente bereits ein erheblich niedrigerer Gesamtgehalt an Ethylenoxideinheiten ausreicht, als im Falle von wasserdispergierbaren Polyisocyanatgemischen des Standes der Technik, die durch Urethanisierung mit Polyetheralkoholen der gleichen Zusammensetzung und Molekulargewichtsverteilung hergestellt wurden. Das erfindungsgemäße Verfahren gestattet so die Herstellung kristallisationsstabiler hochhydrophiler Polyisocyanate, die sich gegenüber den bisher bekannten, Polyetherurethane enthaltenden Polyisocyanatgemischen bei gleicher oder sogar besserer Wasserdispergierbarkeit durch einen höheren Gehalt an Isocyanatgruppen und eine höhere Funktionalität auszeichnen. Auch im Vergleich zu den allophanatmodifizierten Polyisocyanatgemischen der DE-A-19 822 891 mit Allophanatisierungsgraden von mindestens 60 % besitzen die erfindungsgemäßen Verfahrensprodukte bei gleichem Polyethergehalt neben einer nochmals verbesserten Dispergierbarkeit den Vorteil eines höheren NCO-Gehaltes.

Die hervorragende Dispergierbarkeit bereits bei niedrigen Ethylenoxidgehalten in Verbindungen mit hohen NCO-Gehalten und -Funktionalitäten stellt insbesondere für die Verwendung der erfindungsgemäßen Polyisocyanatgemische in wäßrigen 2K-PUR-Lacken einen Vorteil dar, da sich auf diese Weise hochvernetzte Beschichtungen erhalten lassen, die neben sehr guter Lösemittel- und Chemikalienbeständigkeit aufgrund des niedrigen Gehaltes an hydrophilen Gruppen insbesondere eine ausgezeichnete Wasserfestigkeit aufweisen.

Gegebenenfalls können den nach dem erfindungsgemäßen Verfahren hergestellten Polyisocyanatgemischen vor der Emulgierung noch weitere nichthydrophilierte Polyisocyanate, insbesondere Lackpolyisocyanate der obengenannten Art, zugesetzt werden, wobei die Mengenverhältnisse bevorzugt so gewählt werden, dass die resultierenden Polyisocyanatgemische den vorstehend unter a) bis c) genannten Bedingungen entsprechen, und somit ebenfalls erfindungsgemäße Polyisocyanatgemische darstellen, da diese im allgemeinen aus Gemischen aus

(i) erfindungsgemäß hydrophil modifizierten Polyisocyanaten und

(ii) unmodifizierten Polyisocyanaten der beispielhaft genannten Art bestehen.

In solchen Mischungen übernehmen die erfindungsgemäßen Verfahrensprodukte die Funktion eines Emulgators für den nachträglich zugemischten Anteil an nichthydrophilen Polyisocyanaten.

Die erfindungsgemäßen Polyisocyanatgemische stellen wertvolle Ausgangsmaterialien zur Herstellung von Polyurethan-Kunststoffen nach dem Isocyanat-Polyadditionsverfahren dar.

Hierzu werden die Polyisocyanatgemische vorzugsweise in Form wäßriger Emulsionen eingesetzt, die in Kombination mit in Wasser dispergierten Polyhydroxylverbindungen im Sinne von wäßrigen Zweikomponenten-Systemen zur Umsetzung gebracht werden können.

Besonders bevorzugt werden die erfindungsgemäßen Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs 1 000 bis 10 000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen Polyisocyanatgemische alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Bei der erfindungsgemäßen Verwendung als Vernetzerkomponente für wäßrige Lackbindemittel werden die erfindungsgemäßen Polyisocyanatgemische im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls können die erfindungsgemäßen Polyisocyanatgemische in untergeordneten Mengen auch nichtfunktionellen wäßrigen Lackbindemitteln zur Erzielung ganz spezieller Eigenschaften, beispielsweise als Additiv zur Haftverbesserung zugemischt werden.

Selbstverständlich können die erfindungsgemäßen Polyisocyanatgemische auch in mit aus der Polyurethanchemie an sich bekannten Blockierungsmitteln blockierter Form in Kombination mit den obengenannten wäßrigen Lackbindemitteln oder Lackbindemittelkomponenten im Sinne von wäßrigen Einkomponenten-PUR-Einbrennsystemen eingesetzt werden. Geeignete Blockierungsmittel sind beispielsweise Malonsäurediethylester, Acetessigester, Acetonoxim, Butanonoxim, $\varepsilon$-Caprolactam, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erfindungsgemäßen Polyisocyanatgemische formulierten wäßrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im allgemeinen besitzen die mit den erfindungsgemäßen Polyisocyanatgemischen formulierten wäßrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260°C trocknen.

Aufgrund ihrer hervorragenden Wasseremulgierbarkeit, die eine homogene, besonders feinteilige Verteilung in wäßrigen Lackbindemitteln ermöglicht, führt die Verwendung der erfindungsgemäßen Polyisocyanatgemische als Vernetzerkomponente für wäßrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponenten für wäßrige 2K-PUR-Lacke eignen sich die erfindungsgemäßen Polyisocyanatgemische hervorragend als Vernetzer für wäßrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

Die folgenden Beispiele dienen zur weiteren Erläuterung der Erfindung. Der Begriff "Allophanatisierungsgrad" bezeichnet den aus dem NCO-Gehalt errechenbaren prozentualen Anteil der zu Allophanatgruppen umgesetzten, aus Polyetheralkohol und Polyisocyanat entstandenen Urethangruppen. Alle übrigen Prozentangaben beziehen sich auf das Gewicht.

## Beispiele

### Beispiel 1

850 g (4,39 val) eines Isocyanuratgruppen-haltigen Polyisocyanates auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23°C) werden bei 100°C unter trockenem Stickstoff und Rühren vorgelegt, innerhalb von 30 min mit 150 g (0,30 val) eines auf Methanol gestarteten, monofunktionellen Polyethylenoxidpolyethers eines mittleren Molekulargewichtes von 500, entsprechend einem NCO/OH-Äquivalentverhältnis von 14,6:1, versetzt und anschließend bei dieser Temperatur weitergerührt, bis der NCO-Gehalt der Mischung nach etwa 2 h auf den einer vollständigen Urethanisierung entsprechenden Wert von 17,2 % gefallen ist. Durch Zugabe von 0,01 g Zink-(II)-2-ethyl-1-hexanoat wird die Allophanatisierungsreaktion gestartet. Dabei steigt die Temperatur des Reaktionsgemisches aufgrund der freiwerdenden Reaktionswärme bis auf 103°C an. Der Verlauf der Reaktion wird durch NCO-Titration verfolgt. Nach Erreichen eines NCO-Gehaltes von 16,7 % wird die Reaktion durch Zugabe von 0,01 g Benzoylchlorid abgebrochen und das Reaktionsgemisch auf Raumtemperatur abgekühlt. Es liegt ein erfindungsgemäßes, praktisch farbloses klares Polyisocyanatgemisch mit folgenden Kenndaten vor:

| Festgehalt | 100 % |
| --- | --- |
| NCO-Gehalt | 16,6 % |
| NCO-Funktionalität | 3,6 |
| Viskosität (23°C) | 6300 mPas |
| Ethylenoxidgehalt | 14,0 % |
| Allophanatisierungsgrad | 46 % |

### Beispiel 2

850 g (4,39 val) des in Beispiel 1 beschriebenen Isocyanuratgruppen-haltigen Polyisocyanates auf Basis von HDI werden bei 100°C unter trockenem Stickstoff und Rühren vorgelegt, innerhalb von 30 min mit 150 g (0,30 val) des in Beispiel 1 beschriebenen Polyetheralkohols, entsprechend einem NCO/OH-Äquivalentverhältnis von 14,6:1, versetzt und anschließend bei dieser Temperatur weitergerührt, bis der NCO-Gehalt der Mischung nach etwa 2 h auf den einer vollständigen Urethanisierung entsprechenden Wert von 17,2 % gefallen ist. Durch Zugabe von 0,01 g Zink-(II)-2-ethyl-1-hexanoat wird die Allophanatisierungsreaktion gestartet. Dabei steigt die Temperatur des Reaktionsgemisches aufgrund der freiwerdenden Reaktionswärme bis auf 105°C an. Der Verlauf der Reaktion wird durch NCO-Titration verfolgt. Nach Erreichen eines NCO-Gehaltes von 16,9 % wird die Reaktion durch Zugabe von 0,01 g Benzoylchlorid abgebrochen und das Reaktionsgemisch auf Raumtemperatur abgekühlt. Es liegt ein erfindungsgemäßes, praktisch farbloses klares Polyisocyanatgemisch mit folgenden Kenndaten vor:

| Festgehalt | 100 % |
| --- | --- |
| NCO-Gehalt | 16,8 % |
| NCO-Funktionalität | 3,5 |
| Viskosität (23 °C) | 4800 mPas |
| Ethylenoxidgehalt | 14,0 % |
| Allophanatisierungsgrad | 31 % |

### Beispiel 3

830 g (4,58 val) eines Isocyanuratgruppen-haltigen Polyisocyanates auf Basis von HDI mit einem NCO-Gehalt von 23,2 %, einer mittleren NCO-Funktionalität von 3,2 (nach GPC), einem Gehalt an monomerem HDI von 0,2 % und einer Viskosität von 1200 mPas (23°C) werden bei 100°C unter trockenem Stickstoff und Rühren vorgelegt, innerhalb von 30 min mit 170 g (0,49 val) eines auf Methanol gestarteten, monofunktionellen Polyethylenoxidpolyethers eines mittleren Molekulargewichtes von 350, entsprechend einem NCO/OH-Äquivalentverhältnis von 9,3:1, versetzt und anschließend bei dieser Temperatur weitergerührt, bis der NCO-Gehalt der Mischung nach etwa 2 h auf den einer vollständigen Urethanisierung entsprechenden Wert von 17,2 % gefallen ist. Durch Zugabe von 0,01 g Zink-(II)-2-ethyl-1-hexanoat wird die Allophanatisierungsreaktion gestartet. Dabei steigt die Temperatur des Reaktionsgemisches aufgrund der freiwerdenden Reaktionswärme bis auf 108°C an. Der Verlauf der Reaktion wird durch NCO-Titration verfolgt. Nach Erreichen eines NCO-Gehaltes von 16,5 % wird die Reaktion durch Zugabe von 0,01 g Benzoylchlorid abgebrochen und das Reaktionsgemisch auf Raumtemperatur abgekühlt. Es liegt ein erfindungsgemäßes, praktisch farbloses klares Polyisocyanatgemisch mit folgenden Kenndaten vor:

| Festgehalt | 100 % |
|---|---|
| NCO-Gehalt | 16,3 % |
| NCO-Funktionalität | 3,2 |
| Viskosität (23 °C) | 2400 mPas |
| Ethylenoxidgehalt | 15,4 % |
| Allophanatisierungsgrad | 43 % |

**Beispiel 4** (Vergleich gemäß DE-A-19 822 891)

850 g (4,39 val) des in Beispiel 1 beschriebenen Isocyanuratgruppen-haltigen Polyisocyanates auf Basis von HDI werden bei 100°C unter trockenem Stickstoff und Rühren vorgelegt, innerhalb von 30 min mit 150 g (0,30 val) des in Beispiel 1 beschriebenen Polyetheralkohols versetzt und anschließend bei dieser Temperatur weitergerührt, bis der NCO-Gehalt der Mischung nach etwa 2 h auf den einer vollständigen Urethanisierung entsprechenden Wert von 17,2 % gefallen ist. Durch Zugabe von 0,01 g Zink-(II)-2-ethyl-1-hexanoat wird die Allophanatisierungsreaktion gestartet. Dabei steigt die Temperatur des Reaktionsgemisches aufgrund der freiwerdenden Reaktionswärme bis auf 104°C an. Nach Abklingen der Exothermie, etwa 30 min nach Katalysatorzugabe, wird die Reaktion durch Zugabe von 0,01 g Benzoylchlorid abgebrochen und das Reaktionsgemisch auf Raumtemperatur abgekühlt. Es liegt ein erfindungsgemäßes, praktisch farbloses klares Polyisocyanatgemisch mit folgenden Kenndaten vor:

| Festgehalt | 100 % |
|---|---|
| NCO-Gehalt | 16,0 % |
| NCO-Funktionalität | 3,9 |
| Viskosität (23 °C) | 7400 mPas |
| Ethylenoxidgehalt | 14,0 % |
| Allophanatisierungsgrad | 92 % |

**Beispiel 5** (Vergleich gemäß EP-A-0 206 059)

850 g (4,39 val) des in Beispiel 1 beschriebenen Isocyanuratgruppen-haltigen Polyisocyanates auf Basis von HDI werden bei 100°C unter trockenem Stickstoff und Rühren vorgelegt, innerhalb von 30 min mit 150 g (0,30 val) des in Beispiel 1 beschriebenen Polyetheralkohols versetzt und bei dieser Temperatur weitergerührt, bis der NCO-Gehalt der Mischung nach etwa 2 h auf den einer vollständigen Urethanisierung entsprechenden Wert von 17,2 % gefallen ist. Nach Abkühlen auf Raumtemperatur liegt ein farbloses, klares Polyisocyanatgemisch mit folgenden Kenndaten vor:

| Festgehalt | 100 % |
|---|---|
| NCO-Gehalt | 17,2% |
| NCO-Funktionalität | 3,3 |
| Viskosität (23 °C) | 3600 mPas |
| Ethylenoxidgehalt | 14,0 % |
| Allophanatisierungsgrad | 0 % |

**Beispiel 6** (Vergleich gemäß EP-A-0 206 059)

800 g (4,13 val) des in Beispiel 1 beschriebenen Isocyanuratgruppen-haltigen Polyisocyanates auf Basis von HDI werden bei 100°C unter trockenem Stickstoff und Rühren vorgelegt, innerhalb von 30 min mit 200 g (0,40 val) des in Beispiel 1 beschriebenen Polyetheralkohols versetzt und bei dieser Temperatur weitergerührt, bis der NCO-Gehalt der Mischung nach etwa 2 h auf den einer vollständigen Urethanisierung entsprechenden Wert von 15,7 % gefallen ist. Nach Abkühlen auf Raumtemperatur liegt ein farbloses, klares Polyisocyanatgemisch mit folgenden Kenndaten vor:

| Festgehalt | 100 % |
|---|---|
| NCO-Gehalt | 15,7 % |

(fortgesetzt)

| | |
|---|---|
| NCO-Funktionalität | 3,2 |
| Viskosität (23 °C) | 3700 mPas |
| Ethylenoxidgehalt | 18,7% |
| Allophanatisierungsgrad | 0 % |

**Beispiel 7** (Vergleich gemäß DE-A-19 822 891)

830 g (4,58 val) des in Beispiel 3 beschriebenen Isocyanuratgruppen-haltigen Polyisocyanates auf Basis von HDI werden bei 100°C unter trockenem Stickstoff und Rühren vorgelegt, innerhalb von 30 min mit 170 g (0,49 val) des in Beispiel 3 beschriebenen Polyetheralkohols versetzt und anschließend bei dieser Temperatur weitergerührt, bis der NCO-Gehalt der Mischung nach etwa 2 h auf den einer vollständigen Urethanisierung entsprechenden Wert von 17,2 % gefallen ist. Durch Zugabe von 0,01 g Zink-(II)-2-ethyl-1-hexanoat wird die Allophanatisierungsreaktion gestartet. Dabei steigt die Temperatur des Reaktionsgemisches aufgrund der freiwerdenden Reaktionswärme bis auf 108°C an. Nach Abklingen der Exothermie, etwa 20 min nach Katalysatorzugabe, wird die Reaktion durch Zugabe von 0,01 g Benzoylchlorid abgebrochen und das Reaktionsgemisch auf Raumtemperatur abgekühlt. Es liegt ein erfindungsgemäßes, farbloses klares Polyisocyanatgemisch mit folgenden Kenndaten vor:

| | |
|---|---|
| Festgehalt | 100 % |
| NCO-Gehalt | 15,2 % |
| NCO-Funktionalität | 3,8 |
| Viskosität (23 °C) | 2900 mPas |
| Ethylenoxidgehalt | 15,4 % |
| Allophanatisierungsgrad | 95 % |

**Beispiel 8** (Vergleich gemäß EP-A-0 540 985)

830 g (4,58 val) des in Beispiel 3 beschriebenen Isocyanuratgruppen-haltigen Polyisocyanates auf Basis von HDI werden bei 100°C unter trockenem Stickstoff und Rühren vorgelegt, innerhalb von 30 min mit 170 g (0,49 val) des in Beispiel 3 beschriebenen Polyetheralkohols versetzt und anschließend bei dieser Temperatur weitergerührt, bis der NCO-Gehalt der Mischung nach etwa 2 h auf den einer vollständigen Urethanisierung entsprechenden Wert von 17,2 % gefallen ist. Nach Abkühlen auf Raumtemperatur liegt ein farbloses, klares Polyisocyanatgemisch mit folgenden Kenndaten vor:

| | |
|---|---|
| Festgehalt | 100 % |
| NCO-Gehalt | 17,2 % |
| NCO-Funktionalität | 2,9 |
| Viskosität (23 °C) | 1600 mPas |
| Ethylenoxidgehalt | 15,4 % |
| Allophanatisierungsgrad | 0 % |

**Beispiel 9** (Herstellung von Emulsionen)

Jeweils 28 g der erfindungsgemäßen Polyisocyanatgemische aus Beispiel 1, 2 und 3 sowie der Vergleichspolyisocyanate aus Beispiel 4,5,6 und 7 wurden mit jeweils 12 g 1-Methoxypropyl-2-acetat verdünnt, in einem Erlenmeyerkolben mit 100 g entionisiertem Wasser versetzt und anschließend jeweils 1 min mit Hilfe eines Magnetrührer bei 900 U/min gerührt. Von den entstandenen Emulsionen wurde als Maß für die Dispergierbarkeit der unterschiedlichen Polyisocyanatgemische mit Hilfe eines Gerätes "Zetasizer" der Fa. Malvern Instruments die mittlere Teilchengröße bestimmt. Die nachfolgende Tabelle zeigt die gefundenen Werte.

| Polyisocyanatgemisch aus | Allophanatisierungsgrad [%] | mittlere Teilchengröße [nm] |
|---|---|---|
| Beispiel 1 | 46 | 75 |
| Beispiel 2 | 31 | 83 |

EP 1 276 787 B1

(fortgesetzt)

| Polyisocyanatgemisch aus | Allophanatisierungsgrad [%] | mittlere Teilchengröße [nm] |
|---|---|---|
| Beispiel 4 (Vergleich) | 92 | 174 |
| Beispiel 5 (Vergleich) | 0 | 434 |
| Beispiel 6 (Vergleich) | 0 | 88 |
| Beispiel 3 | 43 | 118 |
| Beispiel 7 (Vergleich) | 95 | 169 |
| Beispiel 8 (Vergleich) | 0 | 696 |

Der Vergleich zeigt, dass die erfindungsgemäß hergestellten Polyisocyanatgemische (Beispiel 1 und 2 bzw. 3) gegenüber Polyisocyanatgemischen gleicher Bruttozusammensetzung, die nach DE-A-19 822 891 mit höherem Allophanatisierungsgrad hergestellt wurden (Beispiele 4 bzw. 7), und gemäß der Lehre der EP-A-0 206 059 (Beispiel 5) bzw. EP-A-0 540 985 (Beispiel 9) hergestellten Polyisocyanatgemischen gleicher Bruttozusammensetzung, bei denen die Polyetherketten ausschließlich über Urethanbindungen mit dem Polyisocyanat verknüpft sind, eine deutlich bessere Dispergierbarkeit aufweisen. Zum Erreichen einer ähnlich guten Dispergierbarkeit benötigen Polyetherurethan-modifizierte Polyisocyanatgemische nach EP-A-0 206 059 (Beispiel 6) im Vergleich zu den erfindungsgemäßen Polyisocyanatgemischen (Beispiel 1 und 2) einen erheblich höheren Gesamt-Gehalt an Ethylenoxideinheiten.

**Beispiel 10** (Verwendung)

100 Gew.-Teile einer wäßrigen, Colöser-freien, hydroxyfunktionellen Polyacrylatdispersion mit einem Festkörpergehalt von 43 % und einem OH-Gehalt von 2,5 %, bezogen auf Festharz, im wesentlichen bestehend aus 48,0 % Methylmethacrylat, 27,4 % n-Butylacrylat, 21,6 % Hydroxy-$C_3$-alkylmethacrylat (Anlagerungsprodukt von Propylenoxid an Methacrylsäure) und 3,0 % Acrylsäure, wurden mit 0,5 Gew.-Teilen eines handelsüblichen Entschäumers (Foamaster® TCX, Henkel) gemischt. Diesem Ansatz wurden 16,0 Gew.-Teile des erfindungsgemäßen Polyisocyanates aus Beispiel 1 zugesetzt (entsprechend einem Äquivalentverhältnis von Isocyanatgruppen zu alkoholischen Hydroxylgruppen von 1:1) und die Mischung durch intensives Rühren (2000 U/min) homogenisiert. Anschließend wurde der Festkörpergehalt durch Zugabe von Wasser auf 40 % eingestellt.

Zum Vergleich wurden nach dem gleichen Verfahren aus jeweils 100 Gew.-Teilen der oben beschriebenen hydroxyfunktionellen Polyacrylatdispersion und 16,6 Gew.-Teilen des Polyisocyanates gemäß LeA 32945 aus Beispiel 4 bzw. 15,5 Gew.-Teilen des Polyisocyanates gemäß EP-A-0 206 059 aus Beispiel 5 (jeweils entsprechend einem Äquivalentverhältnis von Isocyanatgruppen zu alkoholischen Hydroxylgruppen von 1:1) Klarlacke hergestellt.

Die Verarbeitungszeit der applikationsfertigen Ansätze betrug in allen Fällen ca. 3 Stunden. Die Lacke wurden in einer Naßfilm-Schichtdicke von 150 µm (ca. 60 µm trocken) auf Glasplatten appliziert und nach 15 minütigem Ablüften unter forcierten Bedingungen (30 min/60°C) getrocknet. Es wurden Lackfilme mit folgenden Eigenschaften erhalten:

| Polyisocyanat aus | Beispiel 1 | Beispiel 4 (Vergleich) | Beispiel 5 (Vergleich) |
|---|---|---|---|
| **Glanz 20°** | 86 | 85 | 75 |
| **Glanz visuell[a]** | 0 | 1 | 3 |
| **Glanzschleier (Haze)** | 22 | 57 | 147 |
| **Pendelhärte [s] nach 1d/7d[b]** | 99/137 | 106/139 | 84/125 |
| **Lösemittelbeständigkeit [c]** | | | |
| Wasser (30 Min.) | 0 | 0 | 2 |
| Isopropanol/Wasser 1:1 (1 Min.) | 0 | 0 | 2 |
| MPA/Xylol 1:1 (1 Min.) | 0 | 0 | 2 |
| Butylglykol (1 Min.) | 0 | 0 | 2 |
| Aceton (1 Min.) | 0 | 0 | 3 |

[a] Bewertung: 0 (sehr gut) - 5 (schlecht)

[b] Pendelhärte nach König (DIN 53157)

[c] Bewertung: 0 - 5 (0 = Lackfilm unverändert; 5 = völlig aufgelöst)

Der Vergleich zeigt, dass mit Hilfe des erfindungsgemäß hergestellten Polyisocyanatgemisches (Beispiel 1) aufgrund der besseren Emulgierbarkeit eine Beschichtung erhalten wird, die sich gegenüber einem unter Verwendung des Polyisocyanatgemisches mit höherem Allophanatisierungsgrad nach DE-A-19 822 891 (Beispiel 4) hergestellten Lackfilm durch einen geringeren Glanzschleier auszeichnet und gegenüber einem unter Verwendung des Polyisocyanatgemisches nach EP-A-0 206 059 (Beispiel 5) erhaltenen Lackfilm darüberhinaus auch eine erheblich höhere Lösemittel- und Wasserbeständigkeit aufweist.

**Patentansprüche**

1. Wasserdispergierbare Polyisocyanatgemische auf Basis aliphatischer, cycloaliphatischer, araliphatischer und/ oder aromatischer Diisocyanate mit

   a) einer mittleren Isocyanatfunktionalität von mindestens 2,0,
   b) einem Gehalt an Isocyanatgruppen (berechnet als NCO; Molekulargewicht = 42) von 5,0 bis 25,0 Gew.-% und
   c) einem Gehalt an innerhalb von Polyetherketten gebundenen Ethylenoxideinheiten (berechnet als $C_2H_2O$; Molekulargewicht = 44) von 2 bis 50 Gew.-%, wobei die Polyetherketten im statistischen Mittel 5 bis 35 Ethylenoxideinheiten enthalten,

   **dadurch gekennzeichnet, dass** die Polyetherketten zu 20 bis 59 mol-% über Allophanatgruppen mit jeweils zwei, jeweils aus mindestens zwei Diisocyanaten aufgebauten Polyisocyanatmolekülen verknüpft sind.

2. Wasserdispergierbare Polyisocyanatgemische auf Basis aliphatischer und/oder cycloaliphatischer Diisocyanate mit

   a) einer mittleren Isocyanatfunktionalität von 2,2 bis 9,9,
   b) einem Gehalt an Isocyanatgruppen (berechnet als NCO; Molekulargewicht = 42) von 6,0 bis 23,0 Gew.-% und
   c) einem Gehalt an innerhalb von Polyetherketten gebundenen Ethylenoxideinheiten (berechnet als $C_2H_2O$; Molekulargewicht = 44) von 5 bis 40 Gew.-%, wobei die Polyetherketten im statistischen Mittel 7 bis 30 Ethylenoxideinheiten enthalten,

   **dadurch gekennzeichnet, dass** die Polyetherketten zu 20 bis 59 mol-% über Allophanatgruppen mit jeweils zwei, jeweils aus mindestens zwei Diisocyanaten aufgebauten Polyisocyanatmolekülen verknüpft sind.

3. Wasserdispergierbare Polyisocyanatgemische gemäß Anspruch 1, **dadurch gekennzeichnet, dass** die Polyetherketten zu 20 bis 59 mol-% über Allophanatgruppen mit jeweils zwei Isocyanuratgruppen aufweisenden Polyisocyanatmolekülen verknüpft sind.

4. Wasserdispergierbare Polyisocyanatgemische gemäß Anspruch 1, **dadurch gekennzeichnet, dass** die Polyetherketten zu 25 bis 59 mol-% über Allophanatgruppen mit jeweils zwei Isocyanuratgruppen aufweisenden Polyisocyanatmolekülen mit ausschließlich aliphatisch und/oder cycloaliphatisch gebundenen Isocyanatgruppen verknüpft sind.

5. Verfahren zur Herstellung von wasserdispergierbaren Polyisocyanatgemischen gemäß Anspruch 1, **dadurch gekennzeichnet, dass** man

   A) eine Polyisocyanatkomponente einer mittleren Funktionalität von 2,0 bis 5,0, einem Gehalt an aliphatisch, cycloaliphatisch, araliphatisch und/oder aromatisch gebundenen Isocyanatgruppen (berechnet als NCO; Molekulargewicht = 42) von 8,0 bis 27,0 Gew.-% und einem Gehalt an monomeren Diisocyanaten von weniger als 1 Gew.-% mit

   B) einem einwertigen, im statistischen Mitel von 5 bis 35 Ethylenoxideinheiten aufweisenden Polyalkylenoxidpolyetheralkohol

   unter Einhaltung eines NCO/OH-Äquivalentverhältnisses von 6:1 bis 400:1 so miteinander umsetzt, dass 20 bis 59 % der durch NCO/OH-Reaktion primär gebildeten Urethangruppen zu Allophanatgruppen weiterreagieren, wobei im übrigen Art und Mengenverhältnisse der genannten Ausgangsverbindungen so gewählt werden, dass die resultierenden Umsetzungsprodukte den in Anspruch 1 genannten Bedingungen entsprechen.

6. Verfahren gemäß Anspruch 5, **dadurch gekennzeichnet, dass** man

   A) eine Polyisocyanatkomponente einer mittleren Funktionalität von 2,3 bis 4,5, einem Gehalt an aliphatisch und/oder cycloaliphatisch gebundenen Isocyanatgruppen (berechnet als NCO; Molekulargewicht = 42) von 14,0 bis 24,0 Gew.-% und einem Gehalt an monomeren Diisocyanaten von weniger als 0,5 Gew.-% mit

   B) einem einwertigen, im statistischen Mittel von 7 bis 30 Ethylenoxideinheiten aufweisenden Polyalkylenoxidpolyetheralkohol

   unter Einhaltung eines NCO/OH-Äquivalentverhältnisses von 8:1 bis 140:1 so miteinander umsetzt, dass 20 bis 59 % der durch NCO/OH-Reaktion primär gebildeten Urethangruppen zu Allophanatgruppen weiterreagieren, wobei im übrigen Art und Mengenverhältnisse der genannten Ausgangsverbindungen so gewählt werden, dass die resultierenden Umsetzungsprodukte den in Anspruch 1 genannten Bedingungen entsprechen.

7. Verfahren gemäß Anspruch 5, **dadurch gekennzeichnet, dass** man als Polyisocyanatkomponente A) ein Isocyanuratgruppen aufweisendes Polyisocyanat auf Basis von 1,6-Diisocyanatohexan, 1-Isocyanato-3,3,5-trimethyl-5-isocyanatomethylcyclohexan und/oder 4,4'-Diisocyanatodicyclohexylmethan einsetzt.

8. Verfahren gemäß Anspruch 5, **dadurch gekennzeichnet, dass** man die Umsetzung in Gegenwart eines die Bildung von Allophanatgruppen beschleunigenden Katalysators durchführt.

9. Verfahren gemäß Anspruch 8, **dadurch gekennzeichnet, dass** man als Allophanatisierungskatalysator organische Zinkverbindungen einsetzt.

10. Verfahren gemäß Anspruch 8, **dadurch gekennzeichnet, dass** man als Allophanatisierungskatalysator Zink-(II)-n-octoat, Zink-(II)-2-ethyl-1-hexanoat und/oder Zink-(II)-stearat einsetzt.

11. Verwendung der Polyisocyanatgemische gemäß Anspruch 1 als Ausgangskomponente bei der Herstellung von Polyurethankunststoffen.

12. Verwendung der Polyisocyanatgemische gemäß Anspruch 1 als Vernetzerkomponente für wasserlösliche oder -dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

**Claims**

1. Water-dispersible polyisocyanate mixtures based on aliphatic, cycloaliphatic, araliphatic and/or aromatic diisocyanates and having

   a) an average isocyanate functionality of at least 2.0,
   b) an isocyanate group content (calculated as NCO; molecular weight = 42) of from 5.0 to 25.0% by weight and
   c) an amount of ethylene oxide units (calculated as $C_2H_2O$; molecular weight = 44) incorporated within polyether chains of from 2 to 50% by weight, the polyether chains containing an average of from 5 to 35 ethylene oxide units,

   **characterized in that** from 20 to 59 mol% of the polyether chains are linked via allophanate groups to in each case two polyisocyanate molecules which have each been synthesized from at least two diisocyanates.

2. Water-dispersible polyisocyanate mixtures based on aliphatic and/or cycloaliphatic diisocyanates and having

   a) an average isocyanate functionality from of 2.2 to 9.9,
   b) an isocyanate group content (calculated as NCO; molecular weight = 42) of from 6.0 to 23.0% by weight and
   c) an amount of ethylene oxide units (calculated as $C_2H_2O$; molecular weight = 44) incorporated within polyether chains of from 5 to 40% by weight, the polyether chains containing an average of from 7 to 30 ethylene oxide units,

**characterized in that** from 20 to 59 mol% of the polyether chains are linked via allophanate groups to in each case two polyisocyanate molecules which have each been synthesized from at least two diisocyanates.

3. Water-dispersible polyisocyanate mixtures according to Claim 1, **characterized in that** from 20 to 59 mol% of the polyether chains are linked via allophanate groups to in each case two polyisocyanate molecules each having two isocyanurate groups.

4. Water-dispersible polyisocyanate mixtures according to Claim 1, **characterized in that** from 20 to 59 mol% of the polyether chains are linked via allophanate groups to in each case two polyisocyanate molecules each having two isocyanurate groups and having exclusively aliphatically and/or cycloaliphatically attached isocyanate groups.

5. Process for preparing water-dispersible polyisocyanate mixtures according to Claim 1, **characterized in that**

A) a polyisocyanate component with an average functionality of from 2.0 to 5.0, containing from 8.0 to 27.0% by weight of aliphatically, cycloaliphatically, araliphatically and/or aromatically attached isocyanate groups (calculated as NCO; molecular weight = 42) and less than 1% by weight of monomeric diisocyanates is reacted with

B) a monofunctional polyalkylene oxide polyether alcohol containing an average of from 5 to 35 ethylene oxide units

at an NCO/OH equivalent ratio of from 6:1 to 400:1 such that from 20 to 59% of the urethane groups formed initially by the NCO/OH reaction react further to form allophanate groups, the nature and proportions of the stated starting compounds otherwise being chosen such that the resultant reaction products meet the conditions specified in Claim 1.

6. Process according to Claim 5, **characterized in that**

A) a polyisocyanate component with an average functionality of from 2.3 to 4.5, containing from 14.0 to 24.0% by weight of aliphatically and/or cycloaliphatically attached isocyanate groups (calculated as NCO; molecular weight = 42) and less than 0.5% by weight of monomeric diisocyanates is reacted with

B) a monofunctional polyalkylene oxide polyether alcohol containing an average of from 7 to 30 ethylene oxide units

at an NCO/OH equivalent ratio of from 8:1 to 140:1 such that from 20 to 59% of the urethane groups formed initially by the NCO/OH reaction react further to form allophanate groups, the nature and proportions of the stated starting compounds otherwise being chosen such that the resultant reaction products meet the conditions specified in Claim 1.

7. Process according to Claim 5, **characterized in that** polyisocyanate component A) comprises a polyisocyanate which contains isocyanurate groups and is based on 1,6-diisocyanatohexane, 1-isocyanato-3,3,5-trimethyl-5-isocyanatomethylcyclohexane and/or 4,4'-diisocyanatodicyclohexylmethane.

8. Process according to Claim 5, **characterized in that** the reaction is conducted in the presence of a catalyst which accelerates the formation of allophanate groups.

9. Process according to Claim 8, **characterized in that** organozinc compounds are used as allophanatization catalyst.

10. Process according to Claim 8, **characterized in that** zinc(II) n-octoate, zinc(II) 2-ethyl-1-hexanoate and/or zinc (II) stearate are used as allophanatization catalyst.

11. Use of the polyisocyanate mixtures according to Claim I as a starting component in the production of polyurethane plastics.

12. Use of the polyisocyanate mixtures according to Claim 1 as a crosslinker component for water-soluble or water-dispersible paint binders or paint binder components in the production of coatings using aqueous coating compositions based on such binders or binder components.

**Revendications**

1. Mélanges de polyisocyanates, dispersibles dans l'eau, à base de diisocyanates aliphatiques, cycloaliphatiques, araliphatiques et/ou aromatiques, avec

    a) une fonctionnalité isocyanate moyenne d'au moins 2,0 ;
    b) une teneur en radicaux isocyanate (calculée comme NCO ; poids moléculaire = 42) allant de 5,0 à 25,0% en poids, et
    c) une teneur en unités oxyde d'éthylène liées au sein de chaînes polyéther (calculée comme $C_2H_2O$ ; poids moléculaire = 44) allant de 2 à 50% en poids, où les chaînes polyéther contiennent selon une moyenne statistique, 5 à 35 unités oxyde d'éthylène,

    **caractérisés en ce que** les chaînes polyéther sont reliées pour 20 à 59% en moles, par des radicaux allophanate avec chaque fois deux molécules de polyisocyanate élaborées chaque fois, à partir d'au moins deux diisocyanates.

2. Mélanges de polyisocyanates, dispersibles dans l'eau, à base de diisocyanates aliphatiques, et/ou cycloaliphatiques, avec

    a) une fonctionnalité isocyanate moyenne allant de 2,2 à 9,9 ;
    b) une teneur en radicaux isocyanate (calculée comme NCO ; poids moléculaire = 42) allant de 6,0 à 23,0% en poids, et
    c) une teneur en unités oxyde d'éthylène liées au sein de chaînes polyéther (calculée comme $C_2H_2O$ ; poids moléculaire = 44) allant de 5 à 40% en poids, où les chaînes polyéther contiennent selon une moyenne statistique, 7 à 30 unités oxyde d'éthylène,

    **caractérisés en ce que** les chaînes polyéther sont reliées pour 20 à 59% en moles, par des radicaux allophanate avec chaque fois deux molécules de polyisocyanate élaborées chaque fois, à partir d'au moins deux diisocyanates.

3. Mélanges de polyisocyanates, dispersibles dans l'eau, suivant la revendication 1, **caractérisés en ce que** les chaînes polyéther sont reliées pour 20 à 59% en moles, par des radicaux allophanate avec chaque fois deux molécules de polyisocyanate présentant des radicaux isocyanurate.

4. Mélanges de polyisocyanates, dispersibles dans l'eau, suivant la revendication 1, **caractérisés en ce que** les chaînes polyéther sont reliées pour 25 à 59% en moles, par des radicaux allophanate avec chaque fois deux molécules de polyisocyanate présentant des radicaux isocyanurate, avec des radicaux isocyanate reliés exclusivement de manière aliphatique et/ou cycloaliphatique.

5. Procédé de préparation de mélanges de polyisocyanates, dispersibles dans l'eau, suivant la revendication 1, **caractérisé en ce que** l'on fait réagir l'un avec l'autre :

    A) un composant polyisocyanate de fonctionnalité moyenne allant de 2,0 à 5,0, une teneur en radicaux isocyanate liés de manière aliphatique, cycloaliphatique, araliphatique et/ou aromatique (calculée comme NCO ; poids moléculaire = 42) allant de 8,0 à 27,0% en poids, et une teneur en diisocyanates monomères inférieure à 1% en poids, avec
    B) un poly(oxyde d'alcoylène)-polyéther-alcool monovalent, présentant en moyenne statistique, 5 à 35 unités oxyde d'éthylène,

    en maintenant un rapport des équivalents NCO/OH allant de 6:1 à 400:1, de sorte que 20 à 59% des radicaux uréthanne formés par la réaction NCO/OH primaire réagissent en radicaux allophanate, où on choisit les composés de départ indiqués de manière usuelle et en des rapports quantitatifs tels que les produits de réaction résultants correspondent aux conditions indiquées à la revendication 1.

**6.** Procédé selon la revendication 5, **caractérisé en ce que** l'on fait réagir l'un avec l'autre :

A) un composant polyisocyanate de fonctionnalité moyenne allant de 2,3 à 4,5, une teneur en radicaux isocyanate liés de manière aliphatique et/ou cycloaliphatique, (calculée comme NCO ; poids moléculaire = 42) allant de 14,0 à 24,0% en poids, et une teneur en diisocyanates monomères inférieure à 0,5% en poids, avec B) un poly(oxyde d'alcoylène)-polyéther-alcool monovalent, présentant en moyenne statistique, 7 à 30 unités oxyde d'éthylène,

en maintenant un rapport des équivalents NCO/OH allant de 8:1 à 140:1, de sorte que 20 à 59% des radicaux uréthanne formés par la réaction NCO/OH primaire réagissent en radicaux allophanate, où on choisit les composés de départ indiqués de manière usuelle et en des rapports quantitatifs tels que les produits de réaction résultants correspondent aux conditions indiquées à la revendication 1.

**7.** Procédé selon la revendication 5, **caractérisé en ce que** l'on met en oeuvre comme composant polyisocyanate A), un polyisocyanate présentant des radicaux isocyanurate à base de 1,6-diisocyanatohexane, de 1-isocyanato-3,3,5-triméthyl-5-isocyanatométhylcyclohexâne et/ou de 4,4'-diisocyanatodicyclohexylméthane.

**8.** Procédé selon la revendication 5, **caractérisé en ce que** l'on réalise la réaction en présence d'un catalyseur accélérant la formation de radicaux allophanate.

**9.** Procédé selon la revendication 8, **caractérisé en ce que** l'on met en oeuvre comme catalyseur d'allophanatisation, des composés organiques du zinc.

**10.** Procédé selon la revendication 8, **caractérisé en ce que** l'on met en oeuvre comme catalyseur d'allophanatisation, le n-octoate de zinc (II), le 2-éthyl-1-hexanoate de zinc (II) et/ou le stéarate de zinc (II).

**11.** Utilisation des mélanges de polyisocyanates selon la revendication 1, comme composants de départ pour la préparation de matières synthétiques en polyuréthanne.

**12.** Utilisation des mélanges de polyisocyanates selon la revendication 1, comme composant de réticulation pour des liants de laques solubles ou dispersibles dans l'eau ou comme composants de liant de laques, lors de la préparation de revêtements en utilisant des agents d'enduction aqueux à base de tels liants ou composants de liant.